# EUROPEAN PATENT APPLICATION

(11) **EP 1 489 049 A1**
(43) Date of publication of application: **22.12.2004**
(21) Application number: 04394036.0
(22) Date of filing: 18.06.2004
(51) Int. Cl.: C02F 3/10, C02F 3/12, C02F 3/30

(54) **A waste water treatment system**

(30) Priority: 18.06.2003 EP 03394054
(71) Applicant: Kingspan Holdings (IRL) Limited, Kingscourt (County Cavan) (IE)
(72) Inventor: Anderson, Alison, Aylesbury Bucks HP22 5EW (GB)
(74) Representative: O'Brien, John Augustine

(57) **Abstract**

The invention relates to a waste treatment system (1) comprising a tank (2) with an activation compartment (4) containing media (17) for housing bacteria for the digestion of waste. The media (17) are confined within a media support (11) having a flexible structure. The media support (11) and media (17) are positioned at a location in the activation compartment (4) to promote bacterial development.

## Description

The invention relates to a waste or sewage treatment system.

In waste treatment systems bacteria are often housed on media. One current approach to providing a support for media is by means of a grid embedded within the walls of the system tank. In another approach JP11226589 describes the use of steel cans to house bacteria. The steel cans together with buoyancy aids are contained in a bag. However, such arrangements are inflexible as the position of the media in the tank cannot be easily changed. Also access to the media and to the tank and components is limited.

The aim of the invention is to provide an improved waste or sewage treatment system.

### Statements of invention

According to the invention there is provided a waste treatment system comprising a tank with an activation compartment containing media for housing bacteria for the digestion of waste wherein, the media are confined within a media support having a flexible structure, wherein the media support is positioned in the activation compartment at a location to promote bacterial development.

The waste treatment system has the advantage that the media support is self contained and self supporting which enables it and the media confined therein to be positioned at a location in the activation compartment to promote bacterial development. The media support and media can be positioned at such a location even when the weight of the bacteria increases over time.

In one embodiment the system comprises a positioning means to enable the media support to be positioned at said location.

The provision of positioning means allows the media support to be positioned and repositioned as required at a location to promote bacterial development.

In another embodiment the activation compartment comprises a diffuser and the media support is positioned in use at a location that is above the diffuser.

The invention enables the media to be are located in the path of air rising from the diffuser which advantageously provides an oxygenated environment for bacterial development. Also the media are substantially prevented from falling on the diffuser or the base of the tank which may lead to blockage problems.

The media support may be positioned between the diffuser and the surface of liquid in the tank.

In one embodiment the activation compartment is defined by base, top and side walls and the media support has a form which enables the media to substantially spread out in the area defined by said side walls.

This has the advantage that when the media support and media are deployed in the waste treatment system the media can spread out in the path of air rising from the diffuser and prevents air rising from the diffuser from bypassing the media. Air contact with the bacteria on the media is thus maximised.

In another embodiment the media support comprises a base portion tapering upwardly towards an apex region.

In a further embodiment the media support comprises a pyramidal form.

In one embodiment the media support is suspended in the tank.

In another embodiment the media support is suspended by means of a tether attached thereto.

Such an arrangement has the advantage that it allows the media support and media to be readily accessed from outside of the waste treatment system tank.

In a further embodiment the media support is removable from the activation compartment to renew the media.

The media support and media may advantageously be removed or repositioned to enable access to the tank or diffuser for maintenance or to renew the media.

In one embodiment the media support is removable from the activation compartment to exchange the media.

The invention enables the user to select a particular media type to achieve a particular treatment. The invention facilitates the selection and exchanging of media as required.

In another embodiment the media support comprises a mesh. Preferably mesh has dimensions of 5mm to 15mm.

In a further embodiment the mesh is comprised of a plastics material. Preferably the mesh is comprised of nylon.

In one embodiment the media support comprises a bag.

In another embodiment the media are floating media.

### Detailed Description of the Invention

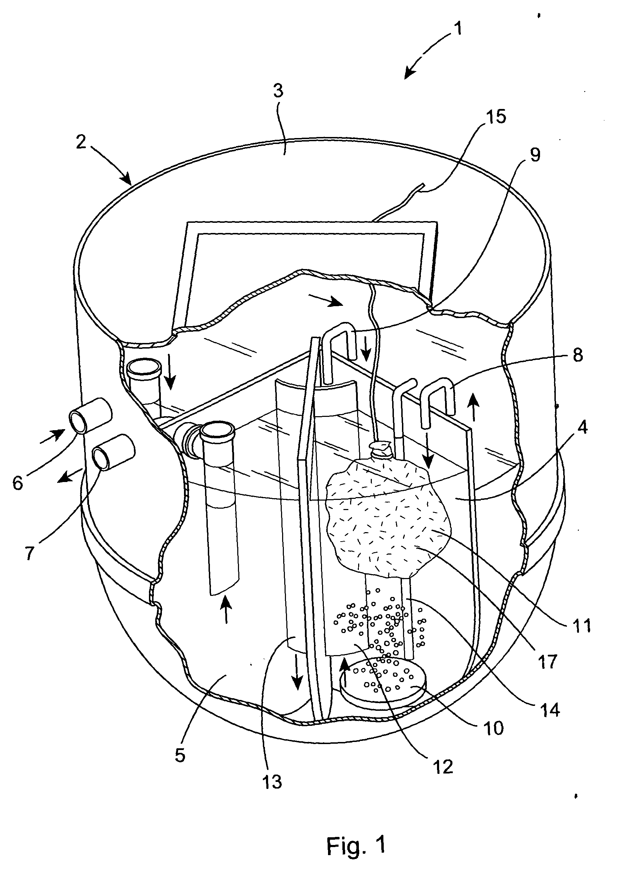

The invention will be more clearly understood from the following description of some embodiments thereof, given by way of example only with reference to the accompanying drawings in which:-
Fig. 1 is a side view of a sewage treatment system of the invention.

Referring to the drawings, the treatment system 1 comprises a tank 2 comprising a primary settlement zone 3, a biological or activation zone 4, and a final settlement zone 5. The tank also comprises an inlet 6, an airlift 8, a sludge airlift 9, a diffuser 10, an air inlet tube to the diffuser 14, and a media support bag 11. There is also provided an outlet 12 from the reactor zone 4 to the final settlement zone 5, an inlet 13 into the final settlement zone 5 and an outlet 7 from the tank.

The biological or activation zone 4 contains media 17 for housing bacteria to facilitate biomass growth for the aerobic digestion of waste. The media 17 are confined within the media support bag 11 which is comprised of mesh to enable ease of access for the bacteria to the colonisation surfaces of the media 17. The mesh size is typically 12mm. Such a mesh promotes ease of flow of water to the media supported therein. The media support bag 11 may be comprised of any suitable material, for example nylon or other suitable inert material.

The media support bag 11 has a form in conformity with the tank or zone in which it is deployed. The size of the bag may be varied according to the size of the tank. This will relate to the type of load and volume of sewage being treated. Various types of media or bacteria may also be used, for example floating media may be used.

The media 17 are effectively supported within activation zone 4 by the media support bag 11 which is positioned at the required location by means of a tether 15. The tether 15 prevents the bag and media from dropping below a certain level within the tank.

The position of the media support bag and media in the tank is adjusted by adjusting the tether 15. To assist establishment and growth of biomass on the media it is preferable that the bag and media are located at a vertical separation from the diffuser. Depending on the type of media and bacteria being used, it may be preferable that the media be supported near the surface of the liquid in the tank or alternatively between the diffuser and liquid surface. The bag and tether arrangement enables adjustment of the level of the media as required. The level of the media and bag in the tank is adjusted to that level required to facilitate and promote optimum biomass development on the media.

It will be appreciated that while in the embodiment described the media support bag supported by means of a tether, any suitable means for adjusting the position of the media support bag and media may be provided. For example, the tank may comprise hooks for engagement with the media support bag.

The bag has a flexible structure and form, so that when placed in liquid in the tank the bag enables the media therein to spread over a relatively large cross-sectional area. The activation compartment of the tank is defined by top, base and side walls and the bag has a form which enables it to extend over the cross-sectional area of the compartment so that the media in the bag can spread out over a wide cross-sectional area. For example the bag may comprise a wide base portion that tapers upwardly towards an apex region. The bag may comprise a pyramidal form or portions of the mesh of the bag may be drawn together to an apex at to close it, however it will be appreciated that a bag of any suitable form may be used. By enabling the media to spread over the cross-sectional area of the tank this arrangement prevents air from the diffuser from bypassing the bag and media as it rises to the surface of the zone. Air contact with the biomass on the media is thus maximised. The air assists biomass development and also helps to strip off the developed biomass from the media so that it can develop into another phase employing both fixed film and activated sludge treatment.

Sewage enters the tank via the inlet 6 passing into the primary settlement zone 3, where gross solids drop out. Settled sewage is passed to the biological or activation zone 4 which contains the diffuser 10, the media 17 which house the bacteria, and the media support bag 11. Air rises from the diffuser 10 to provide an oxygenated environment which allows the bacteria to rise to use the contaminants. Treated sewage passes into a settlement compartment 5 via the outlet route 12 and entry point 13 and is thereafter discharged from the tank 2 via the outlet 7.

As time progresses bacteria will build up on the media 17, which as a result become heavy and start to sink. However, in the present arrangement the media are prevented from sinking onto the diffuser 10 and the base of the activation compartment 4 by means of the tether 15 which is used to suspend the bag.

In use, the media support bag 11 is suspended in the tank above the diffuser 10. By virtue of the flexible structure of the media support bag and the manner in which it is suspended in the tank, the invention enables ease of access to the media, to the diffuser, and more generally to the main body of the tank for maintenance. Access may be achieved firstly, by repositioning the suspended media support bag in the tank to allow a tool or other instrument to be passed beyond it to access the diffuser or other part of the tank, or secondly, by removing the media support bag from the tank.

The tether arrangement provides further flexibility since it provides means to reposition the media support within the tank and also to remove, as required. It will be appreciated however, that any suitable means may be used to move the media support in the tank or to remove it from the tank, for example, a hooking tool.

The media support of the present invention has the advantage that it is self contained and can thus be repositioned, removed, exchanged as required, for example to provide ease of access to the tank for purposes of maintenance of the diffuser or other components, or to exchange the media. Therefore use of the media support provides excellent flexibility. The media support is directly accessible from the exterior of the tank by means of the tether used to suspend it in the tank, which is a more user friendly approach than one which calls for manipulation of a support fixed to the interior of a tank.

The invention allows for media to be positioned at an optimum location in the waste tank for bacterial development. It is possible to adjust the position of the media to ensure that the bacteria are supported in the required location.

The media support of the invention is effectively self supporting and can be independently and flexibly deployed in a tank.

The media support of the invention supports improved breakdown of waste since it promotes growth of bacteria and traps suspended waste preventing sludge formation at the bottom of the tank. The location of the media support of the invention can be adjusted with ease should the sewage levels change.

The media support of the invention has a flexible form which allows the media to spread out in the space between the tank or zone side walls to enable the media to be position in the path of air rising from the diffuser.

The media support of the invention enables the user to select a particular media to achieve a particular treatment. The invention facilitates the selection and exchanging of media as required.

The invention is not limited to the embodiments described but may be varied in construction and detail.

## Claims

1. A waste treatment system (1) comprising a tank (2) with an activation compartment (4) containing media (17) for housing bacteria for the digestion of waste, wherein the media (17) are confined within a media support (11) having a flexible structure wherein, the media support (11) is positioned at a location in the activation compartment (4) to promote bacterial development.

2. A waste treatment system as claimed in claim 1 comprising a positioning means (15) to enable the media support to be positioned at said location.

3. A waste treatment system as claimed in claims 1 or 2, wherein the activation compartment (4) comprises a diffuser (10) and the media support is positioned in use at a location that is above the diffuser (10).

4. A waste treatment system as claimed in claim 3, wherein the media support (11) is positioned between the diffuser (10) and the surface of liquid in the tank.

5. A waste treatment system as claimed in any preceding claim, wherein the activation compartment (4) is defined by base, top and side walls and the media support (11) has a form which enables the media to substantially spread out in the area defined by said side walls.

6. A waste treatment system as claimed in any preceding claim, wherein the media support (11) comprises a base portion tapering upwardly towards an apex region.

7. A waste treatment system as claimed in any preceding claim, wherein the media support (11) comprises a pyramidal form.

8. A waste treatment system as claimed in any preceding claim, wherein the media support (11) is suspended in the tank (2).

9. A waste treatment system as claimed in claim 8, wherein the media support (11) is suspended by means of a tether (15) attached thereto.

10. A waste treatment system as claimed in any preceding claim, wherein the media support (11) is removable from the activation compartment (4) to renew the media (17).

11. A waste treatment system as claimed in any preceding claim, wherein the media support (11) is removable from the activation compartment (4) to exchange the media (17).

12. A waste treatment system as claimed in any preceding claim, wherein the media support (11) comprises a mesh.

13. A waste treatment system as claimed in claim 12, wherein the mesh is comprised of a plastics material.

14. A waste treatment system as claimed in claims 13 or 14, wherein the mesh is comprised of nylon.

15. A waste treatment system as claimed in any preceding claim, wherein the media support comprises a mesh of dimensions 5mm to 15mm.

16. A waste treatment system as claimed in any preceding claim, wherein the media support (11) comprises a bag.

17. A waste treatment as claimed in any preceding claim, wherein the media are floating media.
